# EUROPÄISCHE PATENTSCHRIFT

(11) **EP 2 651 713 B1**
(45) Veröffentlichungstag und Bekanntmachung des Hinweises auf die Patenterteilung: **19.06.2019**
(21) Anmeldenummer: 11782135.5
(22) Anmeldetag: 11.11.2011
(51) Int. Cl.: B60S 1/38

(54) **VERFAHREN ZUR MONTAGE EINER WISCHVORRICHTUNG**
METHOD FOR MOUNTING A WIPER BLADE DEVICE
PROCÉDÉ DE MONTAGE D'UN DISPOSITIF BALAI D'ESSUIE-GLACE

(30) Priorität: 13.12.2010 DE 102010062902
(43) Veröffentlichungstag der Anmeldung: 23.10.2013
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2011/069909
(87) Internationale Veröffentlichungsnummer: WO 2012/079869

(56) Entgegenhaltungen:
- EP-A1- 2 090 479
- DE-A1-102006 047 633
- DE-A1-102008 001 045
- FR-A1- 2 890 026
- FR-A1- 2 925 437
- US-A1- 2007 174 989
- US-A1- 2008 295 273

## Beschreibung

### Stand der Technik

Die Erfindung geht aus von einem Verfahren zur Montage einer Wischblattvorrichtung nach dem Oberbegriff des Patentanspruchs 1.

Es ist bereits eine Wischblattvorrichtung mit einer Wischleisteneinheit, die ein Wischleistenelement, eine Windabweisereinheit und eine Wischlippe aufweist.

Dokument DE102006047633 A1 offenbart ein Verfahren zur Montage einer Wischblattvorrichtung nach dem Oberbegriff des Patentanspruchs 1.

### Offenbarung der Erfindung

Die Erfindung geht aus von einer Wischblattvorrichtung mit einer Wischleisteneinheit, die ein Wischleistenelement, eine Windabweisereinheit und eine Wischlippe aufweist.

Es wird vorgeschlagen, dass die Windabweisereinheit zumindest zwei getrennt voneinander ausgebildete Windabweiserelemente aufweist, wodurch bei einer Montage auf besonders einfache Weise Material eingespart werden kann. Unter einer "Wischleisteneinheit" soll dabei in diesem Zusammenhang insbesondere eine Einheit verstanden werden, die dazu vorgesehen ist, einen Wischblattadapter mit einer Wischlippe zu verbinden. Unter "vorgesehen" soll insbesondere speziell ausgelegt und/oder ausgestattet verstanden werden. Unter einem "Wischblattadapter" soll in diesem Zusammenhang insbesondere ein Adapter verstanden werden, der dazu vorgesehen ist, einen Kopplungsbereich der Wischblattvorrichtung für eine Kopplung mit einem Wischarm bereitzustellen. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen der Wischlippe auf eine Fahrzeugscheibe zu nutzen. Bevorzugt weist das Windabweiserelement zumindest eine konkave Fläche auf. In einer zusätzlichen Ausgestaltung der Erfindung weist das Wischleistenelement einen Längsführungskanal auf, der dazu vorgesehen ist, ein Trägerelement formschlüssig aufzunehmen. Unter einem "Längsführungskanal" soll in diesem Zusammenhang insbesondere ein Führungskanal verstanden werden, der sich in montiertem Zustand in einer Haupterstreckungsrichtung parallel zu einer Längsrichtung der Wischleisteneinheit erstreckt. Unter einer "Längsrichtung" soll in diesem Zusammenhang insbesondere eine Richtung verstanden werden, die sich im Wesentlichen parallel zu einer Längserstreckung des Trägerelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Trägerelement" soll in diesem Zusammenhang insbesondere ein federelastisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegen wirkt.

In einer weiteren Ausgestaltung wird vorgeschlagen, dass zumindest ein Windabweiserelement in einem montierten Zustand einen Formschluss mit dem Wischleistenelement bildet, wodurch eine besonders einfache Montage der Wischblattvorrichtung erreicht werden kann.

Weist die Wischblattvorrichtung einen Wischblattadapter auf, der in einem montierten Zustand einen Formschluss mit zumindest einem Windabweiserelement der Windabweisereinheit bildet, kann eine besonders einfache und sichere Kopplung mit einem weiteren Bauteil, wie einem Wischerarm hergestellt werden.

Umfasst die Wischleisteneinheit ein federelastisches Trägerelement, das in einem montierten Zustand einen Formschluss mit dem Wischleistenelement bildet, kann das Trägerelement sicher in der Wischleisteneinheit gehalten werden.

Weist die Wischblattvorrichtung einen Wischblattadapter auf, der in einem montierten Zustand einen Formschluss mit dem Wischleistenelement bildet, kann eine besonders einfache und sichere Kopplung mit einem weiteren Bauteil, wie einem Wischerarm hergestellt werden.

Ferner wird vorgeschlagen, dass der Wischblattadapter eine Längsführungseinheit aufweist, die dazu vorgesehen ist, das Trägerelement formschlüssig aufzunehmen, wodurch eine besonders sichere Aufnahme des Trägerelements erzielt werden kann. Unter einer "Längsführungseinheit" soll in diesem Zusammenhang insbesondere eine Einheit verstanden werden, die dazu vorgesehen ist, eine Führung eines Trägerelements in Längsrichtung bereitzustellen. Bevorzugt weist die Längsführungseinheit zumindest eine sich in Längsrichtung erstreckende Führungsnut auf, die dazu vorgesehen ist, einen Formschluss mit der Trägereinheit zu bilden.

Eine sichere Verbindung des Windabweiserelements mit dem Wischleistenelement kann erreicht werden, wenn das Windabweiserelement zumindest ein Abschlusselement aufweist, das in einem montierten Zustand einen Formschluss bildet, der eine Bewegung von zumindest einem Windabweiserelement relativ zum Wischleistenelement in eine Längsrichtung vermeidet. Unter einem "Abschlusselement" soll in diesem Zusammenhang insbesondere ein Element verstanden werden, das dazu vorgesehen ist, das an einem freien Ende des Windabweiserelements angeordnet und dazu vorgesehen ist, in den Längsführungskanal einzugreifen.

Eine besonders einfache Montage der Wischblattvorrichtung kann erreicht werden, wenn das Trägerelement zumindest ein Rastmittel aufweist, das in einem montierten Zustand eine Rastverbindung mit einem Wischblattadapter bildet. Unter einem "Rastmittel" soll in diesem Zusammenhang insbesondere ein Mittel verstanden werden, das dazu vorgesehen ist, eine Rastverbindung mit einem federelastischen Bauteil herzustellen, das zur Montage ausgelenkt wird. Bevorzugt ist das Rastmittel als Rastausnehmung ausgebildet.

Erfindungsgemäß wird ein Wischblattadapter der Wischblattvorrichtung, auf die Wischleisteneinheit gesetzt, wobei die Windabweiserelemente formschlüssig mit dem Wischblattadapter verbunden werden, kann eine besonders einfache Montage der Windabweiserelemente erzielt werden.

Erfindungsgemäß wird nach einem Aufsetzen des Wischblattadapters auf die Wischleisteneinheit, ein Trägerelement in die Wischleisteneinheit und in eine Längsführungseinheit des Wischblattadapters eingeschoben, kann der Wischblattadapter besonders sicher mit der Wischleisteneinheit verbunden werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischblattvorrichtung in einem montierten Zustand,
- Fig. 2: eine perspektivische Ansicht des Wischblattadapters einer Wischblattvorrichtung nach Figur 1,
- Fig. 3: eine perspektivische Ansicht eines Wischleistenelements einer Wischblattvorrichtung nach Figur 1,
- Fig. 4: eine perspektivische Ansicht eines Wischblattadapteraufnahmebereichs des Wischleistenelements nach Figur 3,
- Fig. 5: eine perspektivische Ansicht eines Endbereichs des Wischleistenelements nach Figur 3,
- Fig. 6: eine perspektivische Ansicht eines Trägerelements einer Wischleisteneinheit nach Figur 3,
- Fig. 7: eine Draufsicht auf einen Ausschnitt des Trägerelements nach Figur 6,
- Fig. 8: eine perspektivische Ansicht einer Windabweisereinheit der Wischblattvorrichtung nach Figur 1,
- Fig. 9: eine perspektivische Ansicht der Wischblattvorrichtung nach Figur 1 in einem in einem ersten Montageschritt,
- Fig. 10: eine perspektivische Ansicht der Wischblattvorrichtung nach Figur 1 in einem zweiten Montageschritt,
- Fig. 11: eine perspektivische Ansicht der Wischblattvorrichtung nach Figur 1 in einem dritten Montageschritt,
- Fig. 12: eine Schnittdarstellung durch den Wischblattadapter nach Figur 2 in einem montierten Zustand und
- Fig. 13: eine perspektivische Ansicht der Wischblattvorrichtung nach Figur 1 in einem vierten Montageschritt.

### Beschreibung des Ausführungsbeispiels

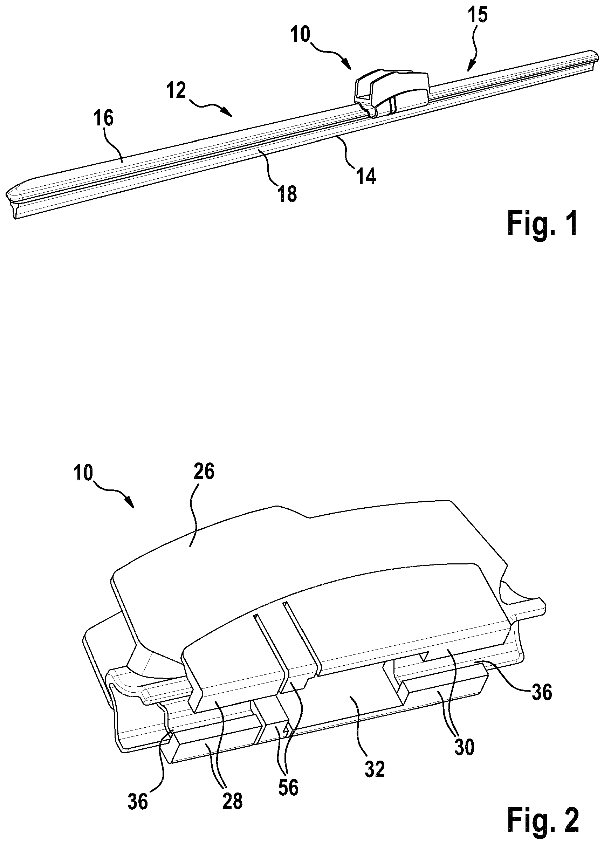

Figur 1 zeigt eine perspektivische Ansicht einer erfindungsgemäßen Wischblattvorrichtung mit einer Wischleisteneinheit 12, die eine Windabweisereinheit 15, eine Wischlippe 18 und ein Wischleistenelement 14 aufweist. Die Windabweisereinheit 15 ist mit dem Wischleistenelement 14 formschlüssig verbunden. Die Wischlippe 18 ist ebenfalls mit dem Wischleistenelement 14 formschlüssig verbunden.

An der Wischleisteneinheit 12 ist ein Wischblattadapter 10 befestigt. Der Wischblattadapter 10 weist einen Koppelbereich zu einer Kopplung mit einem Wischarm eines Kraftfahrzeuges (nicht dargestellt) auf.

Figur 2 zeigt eine perspektivische Ansicht des Wischblattadapters 10, der einen Grundkörper 26 aufweist, an dem zwei Befestigungsmittel 28, 30 angeformt sind. Die Befestigungsmittel 28, 30 grenzen an eine Zentralausnehmung 32 des Grundkörpers 26 an. Ferner sind am Grundkörper 26 zwei auslenkbare Rasthaken 56 angeordnet. Die Rasthaken 56 lassen sich quer zu einer Hauptlängserstreckung des Wischblattadapters 10, die in einem montierten Zustand parallel zu einer Längsrichtung 22 der Wischleisteneinheit 12 verläuft, auslenken. Die Längsrichtung 22 erstreckt sich parallel zu einer Längserstreckung der Wischleisteneinheit 12. Ferner grenzen vier Führungsnuten 36 an die Zentralausnehmung 32 an.

Der Wischblattadapter 10 beinhaltet eine Längsführungseinheit 34, die vier Führungsnuten 36 umfasst. Die Führungsnuten 36 sind zueinander hin geöffnet und erstrecken sich parallel zur Hauptlängserstreckung des Wischblattadapters 10.

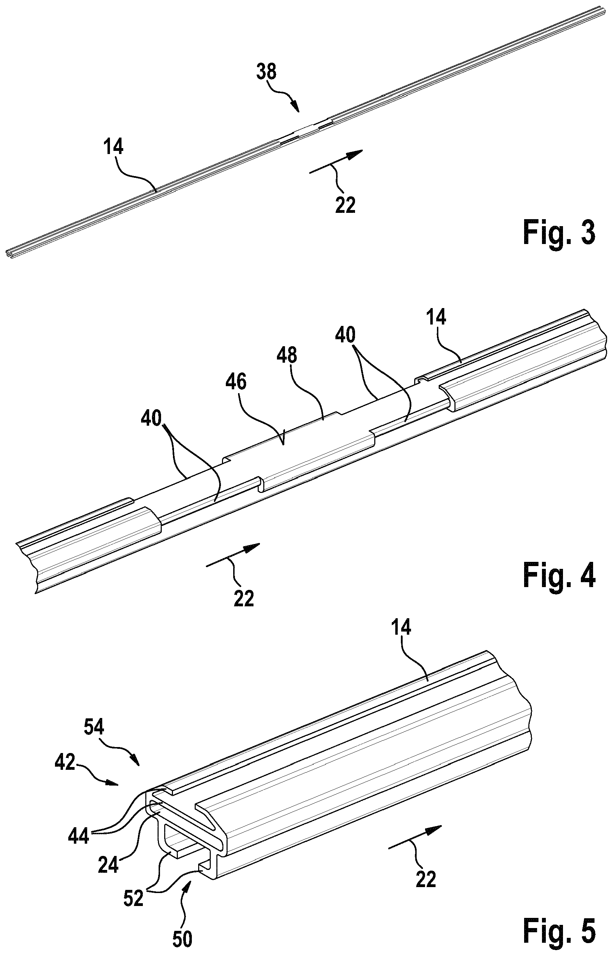

In Figur 3 ist das Wischleistenelement 14 dargestellt. Das Wischleistenelement 14 weist einen Wischblattadapteraufnahmebereich 38 auf, der sich in Längsrichtung 22 betrachtet von 45% bis 55% einer Längserstreckung des Wischleistenelements 14 erstreckt.

Wie näher in Figur 4 gezeigt, weist das Wischleistenelement 14 in seinem Wischblattadapteraufnahmebereich 38 vier Befestigungsausnehmungen 40 auf.

Die Befestigungsausnehmungen 40 grenzen an eine Auflagefläche 46 an. Die Auflagefläche 46 befindet sich auf einem Auflagekörper 48, der zentral im Wischblattadapteraufnahmebereich 38 angeordnet ist.

Im Wischleistenelement 14 verläuft in Längsrichtung 22 ein Längsführungskanal 24 für die Aufnahme eines federelastischen Trägerelements 20, wie in Figur 5 in einem Endbereich 54 des Wischleistenelements 14 dargestellt. Der Längsführungskanal 24 weist einen gleichen Querschnitt auf, wie das Trägerelement 20. Bei einem Einschieben des Trägerelements 20 in den Längsführungskanal 24 bildet sich ein Formschluss. Im Wischblattadapteraufnahmebereich 38 ist der Längsführungskanal 24 innerhalb des Auflagekörpers 48 fortgesetzt.

Zur Befestigung der Windabweisereinheit 15 ist an einer Seite des Wischleistenelements 14 eine Führungseinheit 42, die eine Profilschiene 44 aufweist. Die Profilschiene 44 erstreckt sich in ihrer Haupterstreckung parallel zur Längsrichtung 22.

Auf einer der Führungseinheit 42 gegenüberliegenden Seite ist eine Wischlippenführungseinheit 50 des Wischleistenelements 14 angeordnet, welches zwei L-förmige Führungsprofile 52 aufweist. Innerhalb der Wischlippenführungseinheit 50 ist in einem montierten Zustand ein Kopplungsbauteil der Wischlippe 18 angeordnet und bildet mit den Führungsprofilen 52 einen Formschluss.

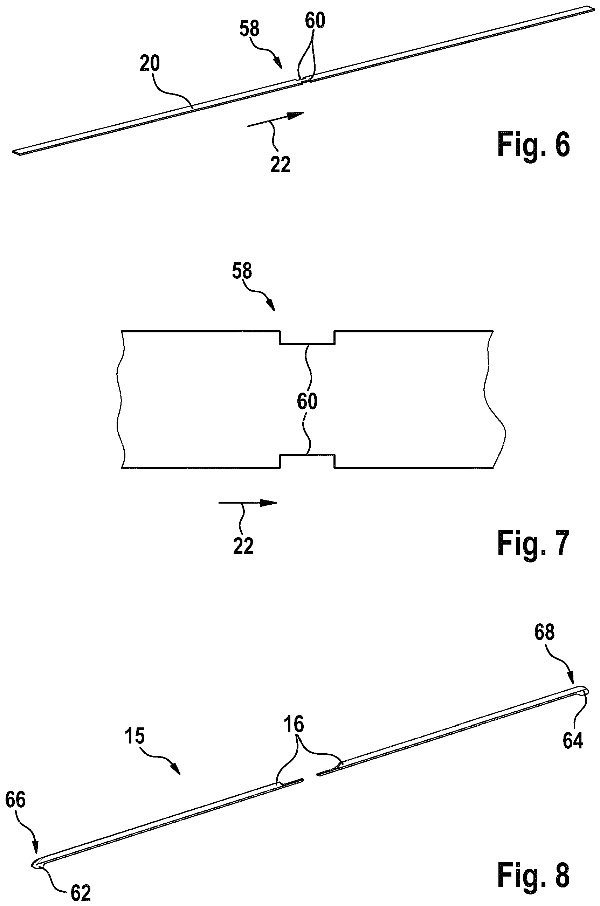

Figur 6 zeigt ein federelastisches Trägerelement 20 der Wischleisteneinheit 12. Das Trägerelement 20 besteht aus einem Federstahl und weist ein mittig angeordnetes Rastmittel 58 auf, das zwei Rastausnehmungen 60 umfasst. Die Rastausnehmungen 60 werden aus dem Federstahl ausgestanzt und weisen ein rechteckiges Profil auf, wie in Figur 7 in einer Draufsicht dargestellt. Die Rastausnehmungen 60 sind in Längsrichtung 22 betrachtet in gleicher Höhe angeordnet. Ferner weist das Trägerelement 20 eine Dicke auf, die einer Breite der Führungsnuten 36 entspricht.

Die Windabweisereinheit 15, wie in Figur 8 gezeigt, weist zwei getrennt voneinander ausgebildete Windabweiserelemente 16 auf. Die Windabweiserelemente 16 umfassen jeweils ein Abschlusselement 62, 64 die in Endbereichen 66, 68 der Windabweisereinheit 15 angeordnet sind. Die Endbereiche 66, 68 befinden sich jeweils von einem freien Ende eines jeden Windabweiserelements 16 ausgehend, innerhalb der ersten bzw. letzten 10% einer Längserstreckung des Windabweiserelements 16. Die Abschlusselemente 62, 64 weisen einen gleichen Querschnitt auf, wie der Längsführungskanal 24 des Wischleistenelements 14. In einem montierten Zustand greifen die Abschlusselemente 62, 64 in den Längsführungskanal 24.

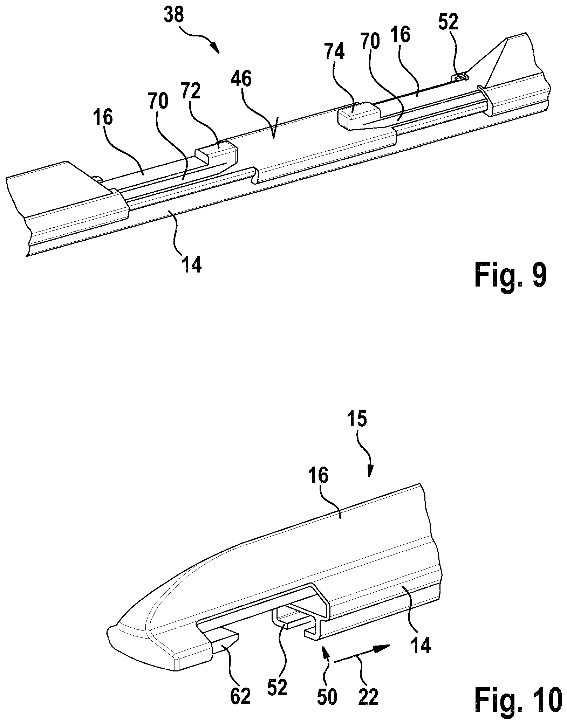

In Figur 9 ist ein erster Montageschritt der Wischblattvorrichtung dargestellt. Die Windabweiserelemente 16 werden in entgegengesetzter Richtung in das Führungsprofil 52 des Wischleistenelements 14 eingeschoben. Dabei greifen je zwei Längsfortsätze 70 der Windabweiserelemente 16 in das Führungsprofil 52. Dadurch bilden die Windabweiserelemente 16 mit dem Wischleistenelement 14 einen Formschluss.

Im Wischblattadapteraufnahmebereich 38 des Wischleistenelements 14 sind Befestigungsansätze 72, 74 an die Windabweiserelemente 16 angeformt, die sich senkrecht von der Auflagefläche 46 weg erstreckt.

Das Abschlusselement 62 wird anschließend in das Führungsprofil 52 eingeführt und vermeidet somit eine Bewegung des Windabweiserelements 16 relativ zum Wischleistenelement 14 in Längsrichtung 22 (Figur 10).

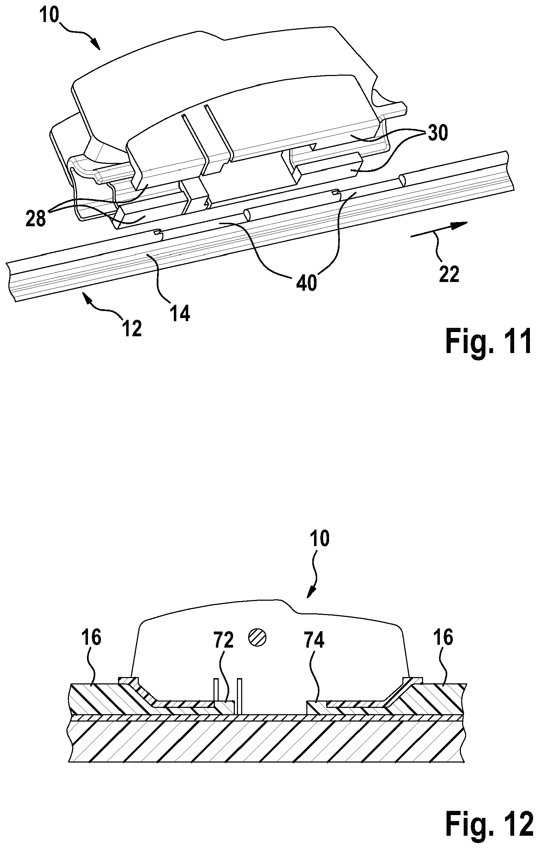

In einem zweiten Montageschritt, wie in Figur 11 gezeigt, wird der Wischblattadapter 10 auf das Wischleistenelement 14 gesetzt. Dabei greifen die Befestigungsmittel 28, 30 des Wischblattadapters 10 formschlüssig in die Befestigungsausnehmungen 40 des Wischleistenelements 14 ein. Der Wischblattadapter 10 liegt in einem montierten Zustand auf der Auflagefläche 46 auf und bildet mit dem Wischleistenelement 14 einen Formschluss. Eine Bewegung des Wischleistenelements 14 relativ zum Wischblattadapter 10 ist in Längsrichtung 22 vermieden. Ferner umschließt der Wischblattadapter 10 die Befestigungsansätze 72, 74 der Windabweiserelemente 16, wie in Figur 12 gezeigt. Dadurch bildet der Wischblattadapter 10 einen Formschluss mit den Windabweiserelementen 16.

In einem dritten Montageschritt wird die Wischlippe 18 in die Wischlippenführungseinheit 50 eingeschoben und bildet mit diesem einen Formschluss. Dadurch bildet das Wischleistenelement 14 in einem montierten Zustand einen Formschluss mit der Wischlippe 18. Ferner wird das Trägerelement 20 in den Längsführungskanal 24 des Wischleistenelements 14 eingeführt. Dadurch bildet das Trägerelement 20 in einem montierten Zustand einen Formschluss mit dem Wischleistenelement 14. Im Wischblattadapteraufnahmebereich 38 tritt das Trägerelement 20 aus dem Längsführungskanal 24 und wird anschließend in der Längsführungseinheit 34 des Wischblattadapters 10 geführt.

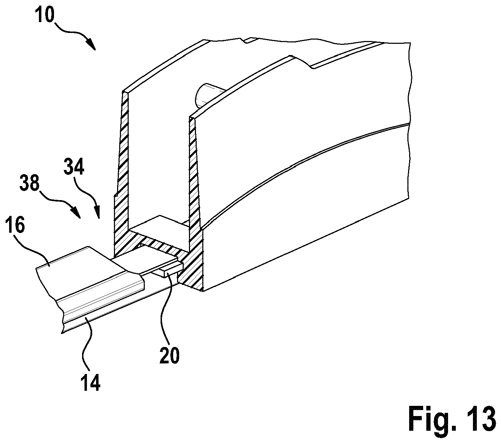

Figur 13 zeigt das Trägerelement 20, das komplett durch die Längsführungseinheit 34 geschoben ist. Das Trägerelement 20 bildet einen Formschluss mit dem Wischblattadapter 10. Der Wischblattadapter 10 kann somit nicht mehr von der Wischleisteneinheit 12 gelöst werden, sondern ist fest mit diesem verbunden. Das Trägerelement 20 wird in einem vierten Montageschritt weiter geschoben, bis es sich vollständig in der Wischleisteneinheit 12 befindet. Um eine Bewegung des Trägerelements 20 relativ zur Wischleisteneinheit 12 zu vermeiden, wird das Abschlusselement 64 des Windabweiserelements 16 in den Längsführungskanal 24 des Wischleistenelements 14 eingeschoben. Dadurch sind der Längsführungskanal 24 und die Wischlippenführungseinheit 50 in ihren zwei Endbereichen 54 verschlossen. Eine Bewegung des Trägerelements 20 innerhalb des Längsführungskanals 24 ist in jeglicher Richtung vermieden.

Das Trägerelement 20 wird ferner durch die Rasthaken 56 des Wischblattadapters 10 gesichert, die in die Rastausnehmungen 60 des Trägerelements 20 eingreifen und eine Rastverbindung eingehen.

Die Rasthaken 56 werden dabei zunächst aus einer Ausgangslage quer zur Längsrichtung 22 ausgelenkt und bewegen sich dann elastisch zurück in die Ausgangslage. Dadurch wird ein Formschluss mit den Rastausnehmungen 60 gebildet und eine Bewegung des Trägerelements 20 relativ zum Wischblattadapter 10 in Längsrichtung 22 vermieden.

## Patentansprüche

1. Verfahren zur Montage einer Wischblattvorrichtung mit einem Wischblattadapter (10) und einer Wischleisteneinheit (12), die ein Wischleistenelement (14), eine Windabweisereinheit (15) und eine Wischlippe (18) aufweist, wobei die Windabweisereinheit (15) zumindest zwei getrennt voneinander ausgebildete Windabweiserelemente (16) aufweist, wobei der Wischblattadapter (10) auf die Wischleisteneinheit (12) gesetzt wird, wobei die Windabweiserelemente (16) formschlüssig mit dem Wischblattadapter (10) verbunden werden, **dadurch gekennzeichnet, dass** nach einem Aufsetzen des Wischblattadapters (10) auf die Wischleisteneinheit (12), ein Trägerelement (20) in die Wischleisteneinheit (12) und in eine Längsführungseinheit (34) des Wischblattadapters (10) eingeschoben wird.

## Claims

1. Method for mounting a wiper blade device with a wiper blade adapter (10) and a wiper strip unit (12) which has a wiper strip element (14), a wind deflector unit (15) and a wiper lip (18), wherein the wind deflector unit (15) has at least two wind deflector elements (16) which are formed separately from one another, wherein the wiper blade adapter (10) is placed onto the wiper strip unit (12), wherein the wind deflector elements (16) are connected to the wiper blade adapter (10) in a form-fitting manner, **characterized in that**, after the wiper blade adapter (10) is placed onto the wiper strip unit (12), a support element (20) is pushed into the wiper strip unit (12) and into a longitudinal guide unit (34) of the wiper blade adapter (10).

## Revendications

1. Procédé de montage d'un dispositif de balai d'essuie-glace avec un adaptateur de balai d'essuie-glace (10) et une unité de lame d'essuyage (12), qui présente un élément de lame d'essuyage (14), une unité de déflecteur de vent (15) et une lèvre d'essuyage (18), dans lequel l'unité de déflecteur de vent (15) présente au moins deux éléments de déflecteur de vent (16) formés séparément l'un de l'autre, dans lequel l'adaptateur de balai d'essuie-glace (10) est placé sur l'unité de lame d'essuyage (12), dans lequel les éléments de déflecteur de vent (16) sont assemblés par emboîtement à l'adaptateur de balai d'essuie-glace (10), **caractérisé en ce qu'**après le placement de l'adaptateur de balai d'essuie-glace (10) sur l'unité de lame d'essuyage (12), on glisse un élément de support (20) dans l'unité de lame d'essuyage (12) et dans une unité de guidage longitudinal (34) de l'adaptateur de balai d'essuie-glace (10).
